(19) Europäisches Patentamt
European Patent Office
Office européen des brevets

(11) **EP 0 849 344 B1**

(12) **EUROPEAN PATENT SPECIFICATION**

(45) Date of publication and mention
of the grant of the patent:
**26.05.2004 Bulletin 2004/22**

(51) Int Cl.⁷: **C09K 11/80**, C09D 5/22

(21) Application number: **97310165.2**

(22) Date of filing: **16.12.1997**

(54) **Long decay luminescent materials and the method for manufacturing the long decay luminescent materials**

Lumineszente Materialen mit langen Zerfall und Methode zur Herstellung derselben

Matériaux luminescents à lente décomposition et méthode pour leur fabrication

(84) Designated Contracting States:
**CH DE FR GB LI**

(30) Priority: **17.12.1996 JP 35355996**
**21.11.1997 JP 32086297**

(43) Date of publication of application:
**24.06.1998 Bulletin 1998/26**

(73) Proprietors:
• **Beijing Hongye Coating Materials Company**
**Fengtai District, Beijing (CN)**
• **Chemitech Inc.**
**Fuchu-shi, Tokyo 183 (JP)**
• **Dainippon Ink and Chemicals, Incorporated**
**Itabashi-ku Tokyo 174-8520 (JP)**

(72) Inventors:
• **Li, Jun, Beijing Hongye Coating Materials Co**
**Beijing (CN)**
• **Li, Pengcheng, c/o Beijing Hongye C. M. Comp.**
**Fengtai District, Beijing (CN)**
• **Liu, Baoshanu**
**c/o Beijing Hongye Coating Mat. Co.**
**Fengtai District, Beijing (CH)**
• **Hao, Qinglong**
**Fengtai District, Beijing (CN)**
• **Xu, Qian, c/o Beijing Hongye C. M. Comp.**
**Fengtai District, Beijing (CN)**
• **Ogura, Atsushi**
**Fuchu-shi, Tokyo, 183 (JP)**
• **Hao, Qingfen**
**Fuchu-shi, Tokyo, 183 (JP)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
**US-A- 5 376 303**

• **DATABASE WPI Section Ch, Week 8829 Derwent Publications Ltd., London, GB; Class L03, AN 88-200216 XP002085732 & JP 63 135482 A (TOSHIBA KK), 7 June 1988**
• **PATENT ABSTRACTS OF JAPAN vol. 008, no. 246 (C-251), 10 November 1984 & JP 59 128211 A (MATSUSHITA DENSHI KOGYO KK), 24 July 1984**
• **DATABASE WPI Section Ch, Week 8430 Derwent Publications Ltd., London, GB; Class L03, AN 84-184850 XP002085733 & JP 59 102979 A (MATSUSHITA ELECTRONICS CORP), 14 June 1984**
• **DATABASE WPI Section Ch, Week 7608 Derwent Publications Ltd., London, GB; Class L03, AN 76-13766X XP002085734 & JP 51 001382 A (TOKYO SHIBAURA ELECTRIC CO), 8 January 1976**
• **PATENT ABSTRACTS OF JAPAN vol. 009, no. 118 (E-316), 23 May 1985 & JP 60 009047 A (MATSUSHITA DENSHI KOGYO KK), 18 January 1985**

- DATABASE INSPEC INSTITUTE OF ELECTRICAL ENGINEERS, STEVENAGE, GB Inspec No. 4172297, JAGANNATHAN R ET AL: "Eu/sup 2+/ luminescence in MAl/sub 3/BO/sub 7/ aluminoborates (M=Ca, Sr, Ba)" XP002085731 & MATERIALS RESEARCH BULLETIN, APRIL 1992, USA, vol. 27, no. 4, pages 459-466, ISSN 0025-5408

**Description**

FIELD OF THE INVENTION

This invention relates to long decay luminescent materials and the methods for manufacturing the long decay luminescent materials. More specially, this invention relates to new long decay luminescent materials which can be excited by variety of excitation sources such as sunlight, artificial lamps, specially by Ultraviolet rays(UV rays) with wavelength of 200 to 450nm and the methods for manufacturing the long decay luminescent materials.

BACKGROUND OF THE INVENTION

Copper-activated zinc sulfide, such as ZnS:Cu, is frequently used in such field as watch or clock dials and safety signs. This zinc sulfide absorbs energy of the W rays and is activated sequently. However, the copper activated zinc sulfide is not completely satisfactory since its brightness falls down very rapidly and it is subject to degradation and deterioration when exposed to UV radiation in an atmosphere.

So, when the zinc sulfide is used in watch dials, it can keep visible brightness for only 20 minutes to 30 minutes and it can not beused outdoor since its degradation and deterioration caused by the moisture.

In order to prolong the decay time of the zinc sulfide, a radiative material, for example promethium (Pm), was added into the zinc sulfide to make it long decay. However, as the radiative materials are harmful to human's body and it is so costly to require using special means for preventing from the radioactiveness and special procedure for treating the industrial waste.

Many problems are still not resolved up to now.

On the other hand, a fluorescent material, which differs from the zinc sulfide, having alkaline earth metal aluminate as the host crystal and europium as an activator was reported. For example, in US patent No.3,294,699, a strontium aluminate with europium activated ($SrAl_2O_4$: Eu) was described.

The content of the divalent europium is 2-8 mole percent relative to the strontium aluminate. This fluorescent material shows emission peak of 520nm while activated by the electron beams. But, as the fluorescent material just mentioned does not have long decay property, it is different from the phosphorescent material.

Furthermore, adding alkaline earth metals to the strontium aluminate activated by the europium to prepare fluorescent materials as $Ba_xSr_y Ca_z Eu_p Al_{12}O_{19}$ (In the formula x+y+z+p=1, at least one of any x, y, z may be zero and $0.1 \geqq p \geqq 0.01$) was reported in UK patent No.1,190,520.

These fluorescent materials show emission peak of 380 to 440nm while activated by the electron beams and are mainly used for fluorescent lamps.

In recent years, luminescent materials activated by normal light energy and having a long decay time have been developed. For example,in Chinese Patent Application Publication No. CN1053807A, a long decay luminescent material represented by the formula:

$m(Sr_{1-x} Eu_x ) O \cdot nAl_2O_3 \cdot yB_2O_3$ ($1 \leqq m \leqq 5$, $1 \leqq n \leqq 8$, $0.001 \leqq y \leqq 0.35$) was reported. This luminescent material uses aluminum oxide, strontium oxide, boron oxide and europium oxide or these elements-containing compounds from which the oxides mentioned above can be produced after heated as the raw materials and is prepared by the main processes as: fire them at 1200 °C to 1600 °C and then fire them under reducing condition formed by a mixture of nitrogen and hydrogen gas at 1000°C to 1400°C.

Besides the Chinese invention, USP No. 5,376,303, Japanese Patent Application Publication No. TOKUKAI-1996-170076 and TOKUKAI-1996-127772 published inventions also relating to luminescent materials with long decay and high brightness and use boron as a component of the luminescent materials.

However, the luminescent materials developed up to now last the decay time only for less then 10 hours and are subject to low initial brightness.

In order to solve the problems, the inventors of the present inventions made repeated efforts and were successful in developing the new luminescent materials that are much better than the traditional zinc sulfide and the alkaline earth metal aluminate activated with europium because they have very long decay time as well as very high initial brightness and in developing methods for preparing these long decay luminescent materials.

A BRIEF OF THE INVENTION

An object of the invention is to provide new luminescent materials having improved long decay time and improved high initial brightness.

Another object of the invention is to provide a method for preparing the invented materials through a simplified process.

The more specific object of the invention is to provide the luminescent mate rials having green, blue, yellow or violet emission light and having improved lo ng decay time and improved high brightness.

The objects of the application are completed by the inventions described bellow.

[1] The luminescent materials, having an improved long decay time, are represented by the formula: $(M_{0.9995 \sim 0.998}Eu_{0.0005 \sim 0.002})Al_2O_4 \cdot (M_{0.9995 \sim 0.998}Eu_{0.0005 \sim 0.002})O \cdot n \ (Al_{1-a-b}B_b \ Q_a \ )_2O_3$, in it M is at least one selected from a group of Sr,Ca, Mg and Ba, Q is at least one selected from a group of La, Ce, Pr, Nd, Sm, Gd, Tb, Dy, Ho, Er, Tm,Yb, Y, Lu, Mn and Bi, a=0.0005~0.002, b=0.001~0.35, n=1 ~8.

[2] A luminescent material having an improved long decay time described in the [1] is represented by the formula: $(Sr_{0.9995 \sim 0.998}Eu_{0.0005 \sim 0.002})Al_2O_4 \cdot (Sr_{0.9995 \sim 0.998}Eu_{0.0005 \sim 0.002})O \cdot (Al_{1-a-b}B_b \ Dy_a \ )_2O_3$ and has the properties as follows.

| (1) | Specific Gravity | 3.60~3.62 |
|-----|------------------|-----------|
| (2) | Powder's Color | Light yellowish Green |
| (3) | Moh's Hardness | 6.2~6.5 |
| (4) | Emission Peak | 515~525 nm |
| (5) | Excitation Wavelength | 200~450 nm |
| (6) | Brightness at the 30th Second after Stopping Excitation | >4000 mcd/m$^2$ |
| (7) | Decay Time | >40 hours |
| (8) | X-ray pattarn(XRD) Analysis Result | Shown in FIG. 1 |

[3] A luminescent material having an improved long decay time described in the [1] is represented by the formula: $(Sr_{0.9995 \sim 0.998}Eu_{0.0005 \sim 0.002})Al_2O_4 \cdot (Sr_{0.9995 \sim 0.998}Eu_{0.0005 \sim 0.002})O \cdot 2(Al_{1-a-b} \ B_b \ Dy_a \ )_2O_3$ and has the properties as follows.

| (1) | Specific Gravity | 3.69~3.71 |
|-----|------------------|-----------|
| (2) | Powder's Color | Light yellowish Green |
| (3) | Moh's hardness | 7.0~7.5 |
| (4) | Emission Peak | 489~495 nm |
| (5) | Excitation Wavelength | 200~450 nm |
| (6) | Brightness at the 30th Second after Stopping Excitation | >2000 mcd/m$^2$ |
| (7) | Decay Time | >60 hours |
| (8) | XRD Analysis Result | Shown in FIG.2 |

[4] A luminescent material having an improved long decay time described in the [1] is represented by the formula: $[(SrCa)_{0.9995 \sim 0.998}Eu_{0.0005 \sim 0.002}]Al_2O_4 \cdot [(SrCa)_{0.9995 \sim 0.998}Eu_{0.0005 \sim 0.002}]O \cdot (Al_{1-a-b} \ B_b \ Dy_a \ )_2O_3$ and has the properties as follows.

| (1) | Specific Gravity | 3.52~3.54 |
|-----|------------------|-----------|
| (2) | Powder's Color | Light yellow |
| (3) | Moh' s Hardness | 5.8~6.1 |
| (4) | Emission Peak | 575~585 nm |
| (5) | Excitation Wavelength | 200~450 nm |
| (6) | Brightness at the 30th Second after Stopping Excitation | >3500 mcd/m$^2$ |
| (7) | Decay Time | >40 hours |
| (8) | XRD Analysis Result | Shown in FIG.3 |

[5] A luminescent material having an improved long decay time described in the [1]] is represented by the formula: $(Ca_{0.9995 \sim 0.998}Eu_{0.0005 \sim 0.002})Al_2O_4 \cdot (Ca_{0.9995 \sim 0.998}Eu_{0.0005 \sim 0.002})O \cdot [Al_{1-a-b} \ B_b \ (DyNd)_a \ ]_2O_3$ and has the properties as follows.

| (1) | Specific Gravity | 2.97~2.99 |
|-----|------------------|-----------|
| (2) | Powder's Color | White |
| (3) | Moh's Hardness | 4.0~4.5 |

(continued)

| (4) | Emission Peak | 430~440 nm |
| (5) | Excitation Wavelength | 200~450 nm |
| (6) | Brightness at the 30th Second after Stopping Excitation | >800 mcd/m$^2$ |
| (7) | Decay Time | >10 hours |
| (8) | XRD Analysis Result | Shown in FIG.4 |

[6] A method for preparing these luminescent materials is characterized by grinding raw materials, mixing them well, heating the mixture gradually during 7 to 10 hours from 400°C up to 1200 ~1600°C, firing it at 1200~1600°C for 3 to 5 hours and then cooling it down to 200°C gradually during 7 to 10 hours, the processes of heating, firing and cooling are all conducted under the condit ion of existence of carbon, and followed by pulverizing and sieving.

[7] A method for preparing the luminescent material represented by the formula as $(Sr_{0.9995 \sim 0.998}Eu_{0.0005 \sim 0.002})Al_2O_4 \cdot (Sr_{0.9995 \sim 0.998}Eu_{0.0005 \sim 0.002})O \cdot (Al_{1-a-b}B_b Dy_a)_2O_3$, in it a=0.0005 ~0.002, b=0.001~0.35 and having the properties as:

| (1) | Specific Gravity | 3.60~3.62 |
| (2) | Powder's Color | Light yellowish Green |
| (3) | Moh's Hardness | 6.2~6.5 |
| (4) | Emission Peak | 515~525 nm |
| (5) | Excitation Wavelength | 200~450 nm |
| (6) | Brightness at the 30th Second after Stopping Excitation | >4000 mcd/m$^2$ |
| (7) | Decay Time | >40 hours |
| (8) | XRD Analysis Result | Shown in FIG.1 |

is characterized by grinding the raw materials such as $SrCO_3$, α-type Alumina, γ-type alumina, boron-containing compound, $Eu_2O_3$ and $Dy_2O_3$, mixing them, heating the mixture well mixed gradually from 400°C up to 1250 °C during 7 to 10 hours, firing it at 1250 °C for 5 to 3 hours, cooling it gradually down to 200°C during 7 to 10 hours, then pulverizing and sieving and the processes of heating, firing and cooling are all conducted under the condition of the existence of carbon.

[8] A method for preparing the luminescent material represented by the formula as $(Sr_{0.9995 \sim 0.998}Eu_{0.0005 \sim 0.002})Al_2O_4 \cdot (Sr_{0.9995 \sim 0.998}Eu_{0.0005 \sim 0.002})O \cdot 2(Al_{1-a-b} B_b Dy_a)_2O_3$ and having the properties as

| (1) | Specific Gravity | 3.69~3.71 |
| (2) | Powder's Color | Light yellowish Green |
| (3) | Moh's Hardness | 7.0~7.5 |
| (4) | Emission Peak | 489~495 nm |
| (5) | Excitation Wavelength | 200~450 nm |
| (6) | Brightness at the 30th Second after Stopping Excitation | >2000 mcd/m$^2$ |
| (7) | Decay Time | >60 hours |
| (8) | XRD Analysis Result | Shown in FIG.2 |

is characterized by grinding the raw materials such as $SrCO_3$, α-type Alumina, γ-type alumina, boron-containing compound, $Eu_2O_3$ and $Dy_2O_3$, mixing them, heating the mixture well mixed gradually from 400 °C up to 1600°C during 7 to 10 hours, firing it at 1600 °C for 5 to 3 hours, cooling it gradually down to 200 °C during 7 to 10 hours, then pulverizing and sieving and the processes of heating, firing and cooling are all conducted under the condition of the existence of carbon.

A DESCRIPTION OF THE DRAWINGS

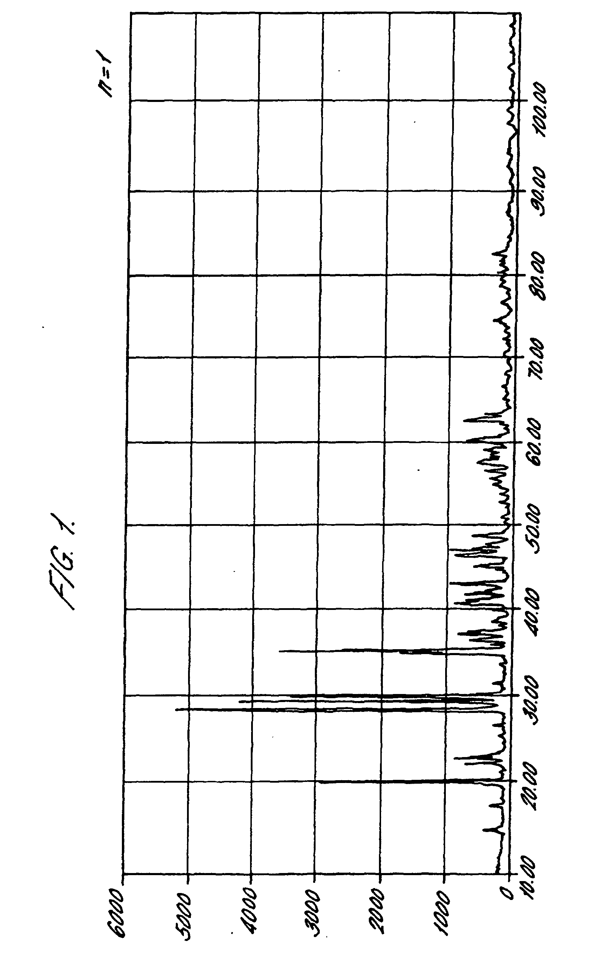

FIG. 1 shows the XRD pattarn of the example 1 of the present invention which is a luminesent material represented by the general formula, when n=1,

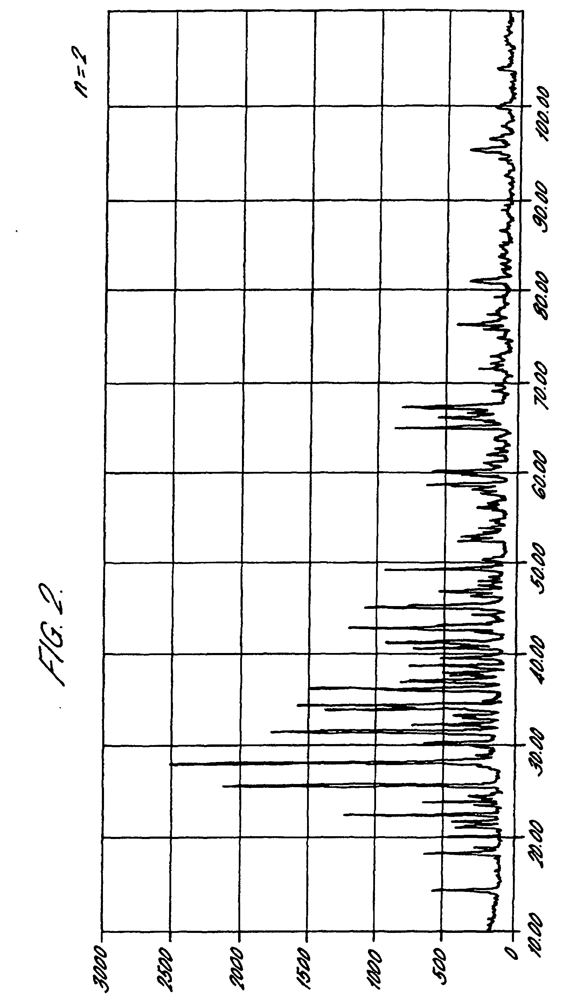

FIG. 2 shows XRD pattarn of the example 3 of the present invention which is a luminesent material represented by the general formula, when n=2,

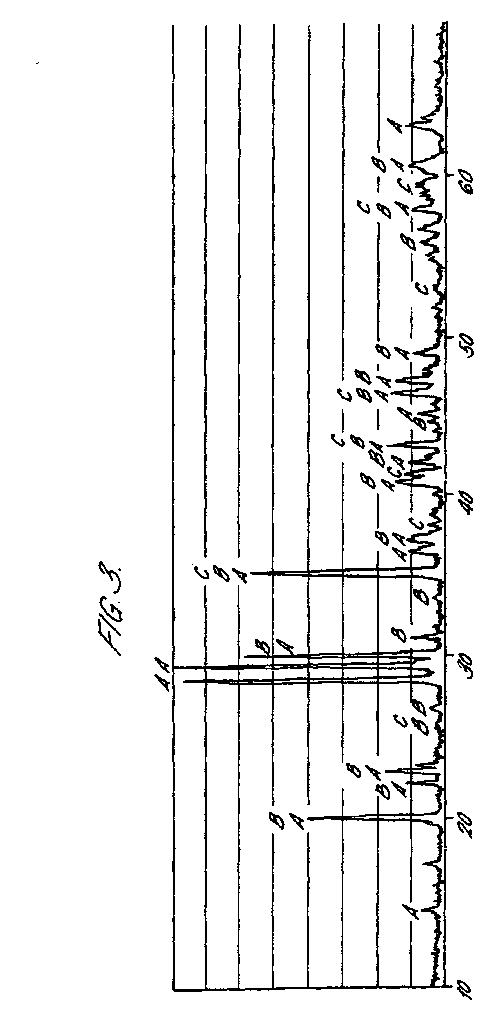

FIG. 3 shows the XRD pattarn of the example 5 of the invention.

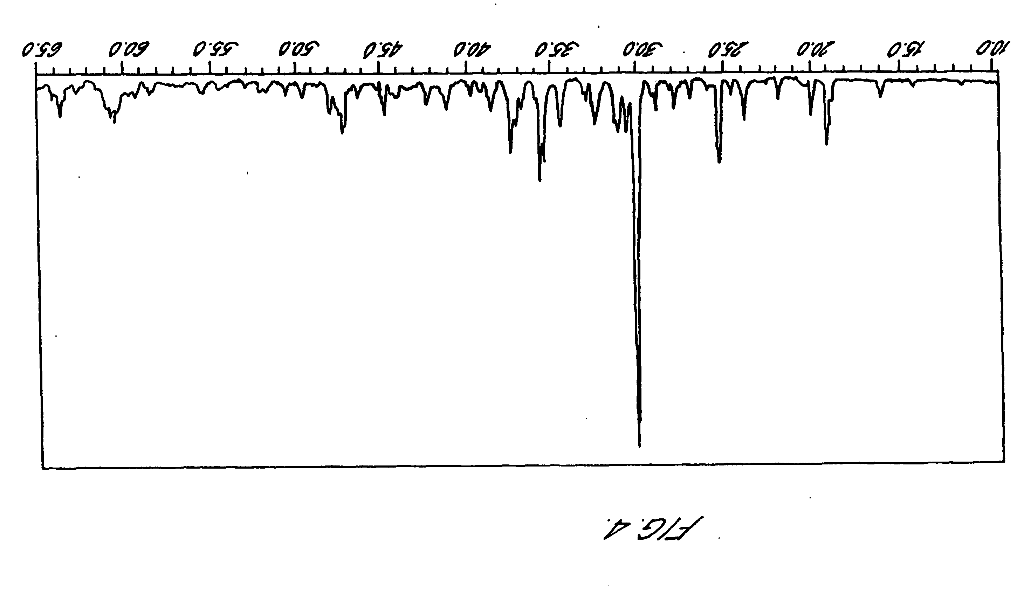

FIG. 4 shows the XRD pattarn of the example 6 of the invention.

DESCRIPTION OF THE INVENTION

The inventions are described in detail as follows. When the invented luminescent materials are excited by some energies such as sunlight, heat, shock etc., specially by W rays, they convert the energy possessed by themselves into visible rays and emit light for a long time.

The invented materials are represented by the general formula as:

$(Mo._{0.9995 \sim 0.998}Eu_{0.0005 \sim 0.002})Al_2O_4 \ (M_{0.9995 \sim 0.998}Eu_{0.0005 \sim 0.002})O \cdot n \ (Al_{1-a-b}B_b \ Q_a)_2O_3$ in it M is at least one selected from a group of Sr, Ca, Mg and Ba, Q is at least one selected from a group of La, Ce, Pr, Nd, Sm, Gd, Tb,Dy, Ho, Er, Tm,Yb, Y, Lu, Mn and Bi, $a=0.0005 \sim 0.002, b=0.001 \sim 0.35, n=1 \sim 8$, have long decay time and have emission peak from 430nm to 585nm.

Specially, Q in the formula is favorably selected from Dy, Nd, Bi, Mn.

A method for preparing these new luminescent materials described in [6] consists of the processes as: grinding the raw materials respectively, mixing them well, heating the mixture gradually during 7 to 10 hours from 400 °C up to 1200~1600°C, firing it at 1200~1600°C for 3 to 5 hours and then cooling it down to 200 °C gradually during 7 to 10 hours, the processes of heating, firing and cooling are all conducted under the condition of existence of carbon, and followed by pulverizing and sieving.

These luminescent materials thus prepared are characterized in having a long decay time and high initial brightness and further having a variety of emission peak wavelength.

A preparation method described in before mentioned [7] is a method for preparing the luminescent material represented by the formula:

$(Sr_{0.9995 \sim 0.998}Eu_{0.0005 \sim 0.002})Al_2O_4 \cdot (Sr_{0.9995 \sim 0.998}Eu_{0.0005 \sim 0.002})O \cdot (Al_{1-a-b}B_b \ Dy_a)_2O_3$, in it $a=0.0005 \sim 0.002, b=0.001 \sim 0.35$, which consists of using $SrCO_3$, $\alpha$-type Alumina, $\gamma$-type alumina, boron-containing compound, $Eu_2O_3$ and $Dy_2O_3$ as the raw materials, grinding these raw materials respectively, mixing them, heating the mixture well mixed gradually from 400°C up to 1250°C during 7 to 10 hours, firing it at 1250 °C for 5 to 3 hours, cooling it gradually down to 200°C during 7 to 10 hours, the processes of heating, firing and cooling are all conducted under the condition of the existence of carbon, then pulverizing and sieving.

The luminescentt material thus prepared(n=1) has a long decay time as well as high initial brightness and has the properties as:

| (1) | Specific Gravity | 3.60~3.62 |
|---|---|---|
| (2) | Powder's Color | Light yellowish Green |
| (3) | Moh's Hardness | 6.2~6.5 |
| (4) | Emission Peak | 515~525 nm |
| (5) | Excitation Wavelength | 200~450 nm |
| (6) | Brightness at the 30th Second after Stopping Excitation | >4000 mcd/m$^2$ |
| (7) | Decay Time | >40 hours |
| (8) | XRD Analysis Result | Shown in FIG |

A preparation method described in before mentioned (8) is a method for preparing the luminescent material represented by the formula

$(Sr_{0.9995 \sim 0.998}Eu_{0.0005 \sim 0.002})Al_2O_4 \cdot (Sr_{0.9995 \sim 0.998}Eu_{0.0005 \sim 0.002})O \cdot 2(Al_{1-a-b} B_b \ Dy_a)_2O_3$, in it $a=0.0005 \sim 0.002, b=0.001 \sim 0.35$ which consists of using $SrCO_3$, $\alpha$-type Alumina, $\gamma$-type alumina, boron-containing compound, $Eu_2O_3$ and $Dy_2O_3$ as the raw materials, grinding these raw materials respectively, mixing them, heating the mixture well mixed gradually from 400°C up to 1600 °C during 7 to 10 hours, firing it at 1600 °C for 5 to 3 hours, cooling it gradually down to 200 °C during 7 to 10 hours, the processes of heating, firing and cooling are all conducted under the condition of the existence of carbon, then pulverizing and sieving.

The luminescent material thus prepated (n=2)has a long decay time as well as high initial brightness and has the properties as:

| (1) | Specific Gravity | $3.69 \sim 3.71$ |
|---|---|---|
| (2) | Powder's Color | Light yellowish Green |
| (3) | Moh's Hardness | $7.0 \sim 7.5$ |
| (4) | Emission Peak | $489 \sim 495$ nm |
| (5) | Excitation Wavelength | $200 \sim 450$ nm |
| (6) | Brightness at the 30th Second after Stopping Excitation | >2000 mcd/m$^2$ |
| (7) | Decay Time | >60 hours |
| (8) | XRD Analysis Result | Shown in FIG.2 |

The newly invented luminescent materials use oxides of the elements represented by M in the general formula, $\alpha$-type alumina and $\gamma$- type alumina mixed in a special ratio, boron oxide or boron and the oxides of the elements represented by Q in the general formula as the co-activator and fire the mixture of the raw materials. As an example of the invention, the invented luminescent materials use strontium carbonate or strontium oxide, $\alpha$-type alumina and $\gamma$-type alumina mixed in a special ratio, boron oxide or boron compound, europium oxide and dysprosium oxide as the raw materials.

The invented new luminescent materials thus prepared have polysynthetic twinning triclinic crystal structure. Specially, the $\alpha$-type alumina and $\gamma$-type alumina mixed in a special ratio contribute to forming thecrystal structure.

In the present inventions $\alpha$-type alumina shares 50% to 99% of the whole quantity of the alumina and $\gamma$-type alumina shares the other, namely, 50% to 1 %. Particularly, both of a good brightness and a long decay time will obtain when the $\alpha$-type alumina shares 90% to 80% of the whole alumina.

According to the present invention, using at least one of the element represented by M in the general formula, $\alpha$-type alumina and $\gamma$-type alumina mixed in a special ratio, Boric acid or boron-containing compound and rare earth element represented by Q as the co-activator in the general formula, the luminescent materials represented by the general formula as:

$(M_{0.9995 \sim 0.998}Eu_{0.0005 \sim 0.002})Al_2O_4 (M_{0.9995 \sim 0.998} Eu_{0.0005 \sim 0.002})O \cdot n (Al_{1-a-b}B_b Q_a)_2O_3$ in it is at least one selected from a group of Sr, Ca, Mg and Ba, Q is at least one selected from a group of La, Ce, Pr, Nd, Sm, Gd, Tb, Dy, Ho, Er, Tm, Yb, Y , Lu Mn and Bi, a=0.0005$\sim$0.002, b=0.001 $\sim$0.35, n=1$\sim$8) are prepared. It seems that the luminescent materials thus prepared are polysynthetic twinning triclinic crystal structure. In the present inventions, activator and co-activators contribute in combination to a higher brightness.

By decreasing quantity of the M used for preparation of the luminescent materials or selecting other element instead of Sr or use other element together with Sr, the emission color of prepared luminescent materials may change. For example, while n=2 in the general formula, the luminescent material may emit blue. Therefor, the emission peaks of the luminescent materials are different depending on what element represented by M to be selected and how many quantity of it to be used. And, the firing temperatures are also different, in the case of n=2, a higher firing temperature is required.

According to the present invention, using at least one of SrO, MgO,CaO or BaO or compounds of Sr, Ba, Mg or Ca which can generate SrO, MgO, CaO or BaO while heating, $\alpha$-type alumina and $\gamma$-type alumina mixed in a special ration, boron oxide or boron compound, europium oxides as the activator and dysprosium oxide as the co-activator, luminescent materials having crystal structure represented by the general formula as $(M_{0.9995 \sim 0.998}Eu_{0.0005 \sim 0.002})$ $Al_2O_4 \cdot (M_{0.9995 \sim 0.998} Eu_{0.0005 \sim 0.002})O \cdot n(Al_{1-a-b}B_b Dy_a)_2O_3$ in it, M is at least one of elements selected from a group of Sr, Ca, Mg and Ba, and a=0.0005 $\sim$0.002, b=0.001$\sim$0.35, n=1$\sim$8) are prepared.

It seems that the luminescent materials thus prepared are polysynthetic twinning triclinic crystal structure. In the present inventions, Eu as the activator and Dy as the co-activator contribute in combination to a higher brightness. By decreasing quantity of the M used for preparation of the luminescent materials or selecting other element instead of Sr or use other element together with Sr, the emission color of prepared luminescent materials may change. For example, while n=2 in the general formula, the luminescent material may emit blue.

Therefor, the emission peaks of the luminescent materials are different depending on what element represented by M to be selected and how many quantity of it to be used. And, the firing temperatures are also different, in the case of n=2, a higher firing temperature is required.

The boron may be present in the general formula in an amount of from 0.001 to 0.35 mole percent as compared with the total molar content of aluminum.

Preferably, the boron may be present in an amount of from 0.1 to 0.2 mole percent. The experiment results show that when "b" in the formula is smaller than 0.001, the decay time of the product goes shorter and when the "b" is bigger than 0.35, a reduction trend of the brightness of the product appears.

In the present inventions, activator and co-activators contribute in combination to a higher brightness. The europium is used as an activator in all the case and other rare elements except europium and Mn, Bi are selected to be used as co-activator in the invention.

Dysprosium shows the best effect as a co-activator. The europium may be present in an amount of from 0.0005 to 0.002 mole percent as compared with the total molar content of the strontium. The experiments show also when the quantity of europium is smaller than 0.0005, luminescent materials with high brightness can not be obtained and, when it is bigger than 0.35, concentrat ion quenching occurs.

Europium oxide or europium-containing compounds may also be used as the raw material. Dysprosium oxide or dysprosium-containing compounds may be the raw materials for provide the dysprosium used as the co-activator. The dysprosium may be present in an amount of from 0.0005 to 0.002 mole percent as compared with the total molar content of the aluminum. The experiments show also when the "a" is smaller than 0.0005, luminescent materials with higher brightness can not be obtained and, when the "a" is bigger than 0.35, concentration quenching occurs.

One or more other rare earth elements such as La, Ce, Pr, Nd, Sm, Gd, Tb, Ho, Er, Tm, Yb, Y, Lu and Mn, Bi may also be added in the invented luminescent materials to improve the brightness.

The invented method for manufacturing the new luminescent materials are described in more detail as follows.

The invented method for manufacturing the new luminescent materials is composed of the processes as:

at first mixing $\alpha$-type alumina with $\gamma$-type alumina well, and then mixing it with the other raw materials, namely, with strontium carbonate, boric acid, boron oxide or boron compound, europium oxide and dysprosium oxide and other rare element oxide if necessary, heating the mixture gradually from 400 °C to 1000~1600°C during 7 to 10 hours, firing them at temperature of 1000 °C~1600°C for 3 to 5 hours cooling them gradually from 1200 °C~1600°C down to 200°C during 7 to 10 hours, and at last pulverizing the sintered materials and sieving.

The processes of heating, firing and cooling are all conducted under the conditions of weak reducing atmosphere. Many methods to produce the reducing atmosphere are well known. For example, a mixture gas of hydrogen and nitrogen may produces the reducing atmosphere.

In the present inventions, besides the methods well known, carbon powders are used to produce a weak reducing atmosphere.

More concretely, the raw mixture is put in a crucible which is buried in carbon powders so as to avoid direct contact of the raw materials with air to produce a weak reducing atmosphere (carbon direct reduction method).

By using the carbon direct reduction method, the luminescent materials may be prepared in more safety and more economical way. Of course a mixture of nitrogen and hydrogen gas may also be used to form the reducing atmosphere in the present inventions.

Owing to the processes of heating, firing and cooling are all conducted gradually during a rather long time, for example, heating and cooling last 7~ 10 hours and firing lasts 3 ~5 hours, boron and rare elements acting as the co-activator can easier enter into the structure of $\gamma$-type $Al_2O_3$ to form $(Al_{1-a-b}B_b Q_a)$ and then to form with the $\alpha$-type alumina the polysynthetic twinning triclinic crystal structure represented by the general formula.

The invented new luminescent materials may be mixed with ink, paint or knead ed into resins to produce luminescent ink, luminescent paint and luminescent resins for safety markings, position markings or used in buildings or for decorations and ornaments. It is also possible to use the luminescent materials in liquid crystal displayer as backlight auxiliary source.

EXAMPLES OF THE INVENTION EMBODIMENTS

The invention will be now described in detail with respect to the specific preferred embodiments thereof, but the new luminescent materials and the methods for preparing them are intended to be described only.

The invention are not intended to be limited to the materials, processes, parameters and the likes recited by the examples.

Example 1

| | |
|---|---|
| $SrCO_3$ | 14.73g |
| $\alpha$-$Al_2O_3$ | 9.93g |
| $\gamma$-$Al_2O_3$ | 0.10g |
| $H_3BO_3$ | 0.22g |

(continued)

| | |
|---|---|
| EU$_2$O$_3$ | 0.035g |
| Dy$_2$O$_3$ | 0.037g |

Grinding the raw materials respectively, mix the $\alpha$-type Al$_2$O$_3$ with $\gamma$-type Al$_2$ Al$_2$O$_3$ at first and then mix them with the others in 4 hours at least, put the mixture in a crucible and bury the crucible in carbon powders, put the crucible with the carbon powders into a electric furnace which is preheated to 400 °C and so regulated as the temperature is gradually raised from 400 °C to 1250°C during 8 hours, fire it at 1250°C for 4 hours and sequently cool it gradually from 1250 °C down to 200 °C during 8 hours.

And at last the product thus obtained is pulverized and sieved by 200 mesh for evaluation. The sample 1 thus prepared has the properties as:

| | |
|---|---|
| Emission peak | 520 nm |
| Emission color | Green |
| Decay time | >40 hours |
| Brightness at the 30th second after stopping excitation | 4500 mcd/m$^2$ |
| Specific gravity | 3.60 |
| Moh's hardness | 6.2 |
| XRD analysis | Shown in FIG. 1 |

Example 2

| | |
|---|---|
| SrCO$_3$ | 147.32g |
| $\alpha$-Al$_2$O$_3$ | 80.63g |
| $\gamma$-Al$_2$O$_3$ | 14.23g |
| H$_3$BO$_3$ | 8.44g |
| Eu$_2$O$_3$ | 0.352g |
| Dy$_2$O$_3$ | 0.373g |

The example 2 was prepared by the same method as the example 1 and has the properties as

| | |
|---|---|
| Emission peak | 520 nm |
| Emission color | Green |
| Decay time | >50 hours |
| Brightness at the 30th second after stopping excitation | 5300 mcd/m$^2$ |
| Specific gravity | 3.62 |
| Moh's hardness | 6.3 |

Example 3

| | |
|---|---|
| SrCO$_3$ | 14.73g |
| $\alpha$-Al$_2$O$_3$ | 13.71g |
| $\gamma$-Al$_2$O$_3$ | 5.86g |
| H$_3$BO$_3$ | 0.94g |
| Eu$_2$O$_3$ | 0.035g |
| Dy$_2$O$_3$ | 0.075g |

Grinding the raw materials respectively, mix the $\alpha$-type Al$_2$O$_3$ with $\gamma$-type Al$_2$O$_3$ at first and then mix them with the others in 4 hours at least, put the mixture in a crucible and bury the crucible in carbon powders, put the crucible with the carbon powders into a electric furnace which is preheated to 400 °C and so regulated as the temperature is gradually raised from 400 °C to 1600°C during 8 hours, fire it at 1600°C for 11 hours and sequently cool it gradually from 1600 °C down to 200°C during 8 hours. And at last the product thus obtained is pulverized and sieved by 200 mesh for evaluation.

The sample 3 thus prepared has the properties as:

| | |
|---|---|
| Emission peak | 489 nm |
| Emission color | Blue |
| Decay time | >50 hours |
| Brightness at the 30th second after stopping excitation | 2100 mcd/m$^2$ |
| Specific gravity | 3.70 |
| Moh's hardness | 7.3 |
| XRD analysis | Shown in FIG. 2 |

Example 4

| | |
|---|---|
| $SrCO_3$ | 147.32g |
| $\alpha$-$Al_2O_3$ | 156.13g |
| $\gamma$-$Al_2O_3$ | 34.27g |
| $H_3BO_3$ | 16.88g |
| $Eu_2O_3$ | 0.352g |
| $Dy_2O_3$ | 0.746g |

The example 4 was prepared by the same method as the example 3 and has the properties as

| | |
|---|---|
| Emission peak | 490 nm |
| Emission color | Blue |
| Decay time | >70 hours |
| Brightness at the 30th second after stopping excitation | 2300 mcd/m$^2$ |
| Specific gravity | 3.72 |

Example 5

| | |
|---|---|
| $CaCO_3$ | 7.234g |
| $SrCO_3$ | 4.904g |
| $\alpha$-$Al_2O_3$ | 8.041g |
| $\gamma$-$Al_2O_3$ | 1.423g |
| $H_3BO_3$ | 0.866g |
| $Eu_2O_3$ | 0.352g |
| $Dy_2O_3$ | 0.373g |

Grinding the raw materials respectively, mix the $\alpha$-type $Al_2O_3$ with $\gamma$-type $Al_2O_3$ at first and then mix them with the others in 4 hours at least, put the mixture in a crucible and bury the crucible in carbon powders, put the crucible with the carbon powders into a electric furnace which is preheated to 400 °C and so regulated as the temperatureis gradually raised from 400°C to 1330 °C during 8 hours, fire it at 1330°C for 4 hours and sequently cool it gradually from 1330 °C down to 200°C during 8 hours. And at last the product thus obtained is pulverized and sieved by 200 mesh for evaluation.

The sample 5 thus prepared has the properties as:

| | |
|---|---|
| Emission peak | 580 nm |

(continued)

| Emission color | Yellow |
|---|---|
| Decay time | >40 hours |
| Brightness at the 30th second after stopping excitation | 3600 mcd/m$^2$ |
| Specific gravity | 3.53 |
| Moh's hardness | 6.0 |
| XRD analysis | Shown in FIG. 3 |

Example 6

| | |
|---|---|
| $CaCO_3$ | 9.801g |
| $\alpha$-$Al_2O_3$ | 8.063g |
| $\gamma$-$Al_2O_3$ | 1.423g |
| $H_3BO_3$ | 0.866g |
| $Eu_2O_3$ | 0.176g |
| $Dy_2O_3$ | 0.186g |
| $Nd_2O_3$ | 1.680g |

Grinding the raw materials respectively, mix the $\alpha$-type $Al_2O_3$ with $\gamma$-type $Al_2O_3$ at first and then mix them with the others in 4 hours at least, put the mixture in a crucible and bury the crucible in carbon powders, put the crucible with the carbon powders into a electric furnace which is preheated to 400 °C and so regulated as the temperature is gradually raised from 400 °C to 1230°C during 8 hours, fire it at 1230°C for 3 hours and sequently cool it gradually from 1230 °C down to 200°C during 8 hours. And at last the product thus obtained is pulverized and sieved by 200 mesh for evaluation.

The sample 6 thus prepared has the properties as:

| Emission peak | 440 nm |
|---|---|
| Emission color | Violet |
| Decay time | >10 hours |
| Brightness at the 30th second after stopping excitation | 820 mcd/m$^2$ |
| Specific gravity | 2.98 |
| Moh's hardness | 4.3 |
| XRD analysis | Shown in FIG. 4 |

Comparative example 1

| | |
|---|---|
| $SrCO_3$ | 14.73g |
| $\alpha$-$Al_2O_3$ | 9.67g |
| $\gamma$-$Al_2O_3$ | 0.51g |

Use the materials lined above as the raw materials and prepare the comparative examples 1 by the same method as the example 1 of the present invention. The comparative example 1 thus prepared was white and does not emit light at all.

Comparative example 2

| $SrCO_3$ | 14.73g |
|---|---|

(continued)

| | |
|---|---|
| $\alpha$-Al$_2$O$_3$ | 9.67g |
| $\gamma$-Al$_2$O$_3$ | 0.00g |
| H$_3$BO$_3$ | 0.22g |
| Eu$_2$O$_3$ | 0.03g |
| Dy$_2$O$_3$ | 0.037g |

Use the materials lined above as the raw materials and prepare the comparative examples 2 by the same method as the example 1 of the present invention. The comparative example 2 thus prepared was light green and its decay time lasts only for 30 minutes.

Comparative example 3

| | |
|---|---|
| SrCO$_3$ | 14.73g |
| $\alpha$-Al$_2$O$_3$ | 0.00g |
| $\gamma$-Al$_2$O$_3$ | 10.03g |
| H$_3$BO$_3$ | 0.22g |
| Eu$_2$O$_3$ | 0.03g |
| Dy$_2$O$_3$ | 0.037g |

Use the materials lined above as the raw materials and prepare the comparative examples 2 by the same method as the example 1 of the present invention. The canparative example 3 thus prepared was light green ard has initial brightness of about 1100mcd/m$^2$ and its decay time lasts for about 2 hours.

## Claims

1. A luminescent material of formula:

$$(M_{0.9995-0.998} Eu_{0.0005-0.002}) Al_2O_4 \cdot$$

$$(M_{0.9995-0.998} Eu_{0.0005-0.002}) O \cdot n (Al_{1-a-b} B_b Q_a)_2O_3$$

wherein:

each M, which may be identical or different, is selected from Sr, Ca, Mg and Ba,
each Q, which may be identical or different, is selected from La, Ce, Pr, Nd, Sm, Gd, To, Dy, Ho, Er, Tm, Yb, Y, Lu, Mn and Bi,
$a = 0.0005$ to $0.002$
$b = 0.001$ to $0.35$, and
$n = 1$ to $8$.

2. A material according to claim 1 wherein M is Sr and Q is Dy.

3. A material according to claim 2 wherein n is 1.

4. A material according to claim 2 wherein n is 2.

5. A material according to claim 3 or claim 4, wherein the material has a polysynthetic twinning triclinic crystal structure.

6. A method for preparing a material as defined in any one of the preceding claims which comprises:

(i) grinding and mixing well appropriate amounts of the appropriate raw materials;
(ii) heating the mixture gradually from 400°C up to 1200-1600°C over 7 to 10 hours;
(iii) firing the mixture at 1200-1600°C for 3 to 5 hours;
(iv) cooling the mixture down to 200°C gradually over 7 to 10 hours; and
(v) pulverising and sieving the mixture;

wherein the heating, firing and cooling are all conducted in a reducing atmosphere.

7. A method for preparing a material as defined in claim 2 or 3 which comprises:

(i) grinding and mixing appropriate amounts of $SrCo_3$ or SrO, $\alpha$-type alumina, $\gamma$-type alumina, a boron-containing compound, a europium-containing compound and a dysprosium-containing compound;
(ii) heating the mixture gradually from 400°C up to about 1250°C over 7 to 10 hours;
(iii) firing the mixture at about 1250°C for 3 to 5 hours;
(iv) cooling the mixture down to 200°C gradually over 7 to 10 hours; and
(v) pulverizing and sieving the mixture;

wherein the heating, firing and cooling are all conducted in a reducing atmosphere.

8. A method for preparing a material as defined in claim 2 or 4 which comprises:

(i) grinding and mixing appropriate amounts of $SrCo_3$ or SrO, $\alpha$-type alumina, $\gamma$-type alumina, a boron-containing compound, a europium-containing compound and a dysprosium-containing compound;
(ii) heating the mixture gradually from 400°C up to about 1600°C over 7 to 10 hours;
(iii) firing the mixture at about 1600°C for 3 to 5 hours;
(iv) cooling the mixture down to 200°C gradually over 7 to 10 hours; and
(v) pulverizing and sieving the mixture;

wherein the heating, firing and cooling are all conducted in a reducing atmosphere.

9. A method according to claim 7 or 8 wherein the europium-containing compound is $Eu_2O_3$ and the dysprosium-containing compound is $Dy_2O_3$.

10. A method according to any one of claims 6 to 9 wherein the reducing atmosphere is provided by the presence of carbon.

11. A luminescent ink, paint or resin which comprises a material as defined in any one of claims 1 to 5 and a resin.

12. A liquid crystal display which comprises a material as defined in any one of claims 1 to 5.


**Patentansprüche**

1. Lumineszierendes Material der Formel:

$$(M_{0,9995-0,998} \, Eu_{0,0005-0,002}) \, Al_2O_4 \, \cdot$$

$$(M_{0,9995-0,998} \, Eu_{0,0005-0,002}) \, O \cdot n \, (Al_{1-a-b} \, B_b \, Q_a)_2O_3$$

worin:

jedes M, welches gleich oder unterschiedlich sein kann, ausgewählt ist aus Sr, Ca, Mg und Ba,
jedes Q, welches gleich oder unterschiedlich sein kann, ausgewählt ist aus La, Ce, Pr, Nd, Sm, Gd, To, Dy, Ho, Er, Tm, Yb, Y, Lu, Mn und Bi,
a = 0,0005 bis 0,002
b = 0,001 bis 0,35, und
n = 1 bis 8.

**2.** Material nach Anspruch 1, wobei M Sr ist und Q Dy ist.

**3.** Material nach Anspruch 2, wobei n 1 ist.

**4.** Material nach Anspruch 2, wobei n 2 ist.

**5.** Material nach Anspruch 3 oder Anspruch 4, wobei das Material eine polysynthetisch verzwillingte trikline Kristallstruktur aufweist.

**6.** Verfahren zur Herstellung eines Material wie in einem der vorhergehenden Ansprüche definiert, welches umfasst:

(i) Zerkleinern und gutes Mischen entsprechender Mengen der entsprechenden Rohstoffe;
(ii) allmähliches Erwärmen der Mischung von 400 °C bis zu 1200 - 1600 °C über 7 bis 10 Stunden;
(iii) Brennen der Mischung bei 1200 - 1600 °C für 3 bis 5 Stunden;
(iv) allmähliches Abkühlen der Mischung auf 200 °C über 7 bis 10 Stunden; und
(v) Pulverisieren und Sieben der Mischung;

wobei das Erwärmen, Brennen und Kühlen jeweils in einer reduzierenden Umgebung durchgeführt wird.

**7.** Verfahren zur Herstellung eines Materials wie in Anspruch 2 oder 3 definiert, welches umfasst:

(i) Zerkleinern und Mischen entsprechender Mengen an $SrCo_3$ oder SrO, Typ-$\alpha$-Aluminiumoxid, Typ-$\gamma$-Aluminiumoxid, einer Bor-haltigen Verbindung, einer Europium-haltigen Verbindung und einer Dysprosium-haltigen Verbindung;
(ii) allmähliches Erwärmen der Mischung von 400 °C auf ungefähr 1250 °C über 7 bis 10 Stunden;
(iii) Brennen der Mischung bei ungefähr 1250 °C für 3 bis 5 Stunden;
(iv) allmähliches Abkühlen der Mischung auf 200 °C über 7 bis 10 Stunden; und
(v) Pulverisieren und Sieben der Mischung;

wobei das Erwärmen, Brennen und Kühlen jeweils in einer reduzierenden Umgebung durchgeführt wird.

**8.** Verfahren zur Herstellung eines Materials wie in Anspruch 2 oder 4 definiert, welches umfasst:

(i) Zerkleinern und Mischen entsprechender Mengen an $SrCo_3$ oder SrO, Typ-$\alpha$-Aluminiumoxid, Typ-$\gamma$-Aluminiumoxid, einer Bor-haltigen Verbindung, einer Europium-haltigen Verbindung und einer Dysprosium-haltigen Verbindung;
(ii) allmähliches Erwärmen der Mischung von 400 °C auf ungefähr 1600 °C über 7 bis 10 Stunden;
(iii) Brennen der Mischung bei ungefähr 1600 °C für 3 bis 5 Stunden;
(iv) allmähliches Abkühlen der Mischung auf 200 °C über 7 bis 10 Stunden; und
(v) Pulverisieren und Sieben der Mischung;

wobei das Erwärmen, Brennen und Kühlen jeweils in einer reduzierenden Umgebung durchgeführt wird.

**9.** Verfahren nach Anspruch 7 oder 8, wobei die Europium-haltige Verbindung $Eu_2O_3$ ist und die Dysprosium-haltige Verbindung $Dy_2O_3$ ist.

**10.** Verfahren nach einem der Ansprüche 6 bis 9, wobei die reduzierende Umgebung durch Anwesenheit von Kohlenstoff bereitgestellt wird.

**11.** Lumineszierende Tinte, Farbe oder Harz welches ein wie in einem der Ansprüche 1 bis 5 definiertes Material und ein Harz umfasst.

**12.** Flüssigkristall-Anzeige welche ein wie in einem der Ansprüche 1 bis 5 definiertes Material umfasst.

## Revendications

**1.** Matière luminescente de formule :

$$(M_{0,9995\text{-}0,998}\ Eu_{0,0005\text{-}0,002})\ Al_2O_4 \cdot$$

$$(M_{0,9995\text{-}0,998}\ Eu_{0,0005\text{-}0,002})\ O \cdot n\ (Al_{1\text{-}a\text{-}b}\ B_b\ Q_a)_2O_3$$

dans laquelle :

M, qui peuvent être identiques ou différents, sont choisis chacun entre Sr, Ca, Mg et Ba.
Q, qui peuvent être identiques ou différents, sont choisis chacun entre La, Ce, Pr, Nd, Sm, Gd, To, Dy, Ho, Er, Tm, Yb, Y, Lu, Mn et Bi,
$a = 0,0005$ à $0,002$
$b = 0,001$ à $0,35$, et
$n = a$ à $8$.

2. Matière suivant la revendication 1, dans laquelle M représente Sr et Q représente Dy.

3. Matière suivant la revendication 2, dans laquelle n est égal à 1.

4. Matière suivant la revendication 2, dans laquelle n est égal à 2.

5. Matière suivant la revendication 3 ou la revendication 4, qui a une structure cristalline triclinique à hémitropie polysynthétique.

6. Procédé pour la préparation d'une matière telle que définie dans l'une quelconque des revendications précédentes, qui comprend :

(i) le broyage et le mélange de quantités bien appropriées des matières premières appropriées ;
(ii) le chauffage du mélange progressivement de 400°C jusqu'à 1200-1600°C en un temps de 7 à 10 heures ;
(iii) la cuisson du mélange à 1200-1600°C pendant 3 à 5 heures ;
(iv) le refroidissement du mélange jusqu'à 200°C progressivement en un temps de 7 à 10 heures ; et
(v) la pulvérisation et le tamisage du mélange ;

dans lequel le chauffage, la cuisson et le refroidissement sont tous effectués dans une atmosphère réductrice.

7. Procédé pour la préparation d'une matière telle que définie dans la revendication 2 ou 3, qui comprend :

(i) le broyage et le mélange de quantités appropriées de $SrCO_3$ ou SrO, d'alumine de type $\alpha$, d'alumine de type $\gamma$, d'un composé contenant du bore, d'un composé contenant de l'europium et d'un composé contenant du dysprosium ;
(ii) le chauffage du mélange progressivement de 400°C jusqu'à environ 1250°C en un temps de 7 à 10 heures ; et
(iii) la cuisson du mélange à environ 1250°C pendant 3 à 5 heures ;
(iv) le refroidissement du mélange jusqu'à 200°C progressivement en un temps de 7 à 10 heures ; et
(v) la pulvérisation et le tamisage du mélange ;

dans lequel le chauffage, la cuisson et le refroidissement sont tous effectués dans une atmosphère réductrice.

8. Procédé pour la préparation d'une matière telle que définie dans la revendication 2 ou 4, qui comprend :

(i) le broyage et le mélange de quantités appropriées de $SrCO_3$ ou de SrO, d'alumine de type $\alpha$, d'alumine de type $\gamma$, d'un composé contenant du bore, d'un composé contenant de l'europium et d'un composé contenant du dysprosium ;
(ii) le chauffage du mélange progressivement de 400°C jusqu'à environ 1600°C en un temps de 7 à 10 heures ;
(iii) la cuisson du mélange à environ 1600°C pendant un temps de 3 à 5 heures ;
(iv) le refroidissement du mélange jusqu'à 200°C progressivement en un temps de 7 à 10 heures ; et
(v) la pulvérisation et le tamisage du mélange ;

dans lequel le chauffage, la cuisson et le refroidissement sont tous effectués dans une atmosphère réductrice.

9. Procédé suivant la revendication 7 ou 8, dans lequel le composé contenant de l'europium est $Eu_2O_3$ et le composé contenant du dysprosium est $Dy_2O_3$.

10. Procédé suivant l'une quelconque des revendications 6 à 9, dans lequel l'atmosphère réductrice est fournie par la présence de carbone.

11. Encre, peinture ou résine luminescente qui comprend une matière telle que définie dans l'une quelconque des revendications 1 à 5 et une résine.

12. Système d'affichage à cristaux liquides qui comprend une matière telle que définie dans l'une quelconque des revendications 1 à 5.

EP 0 849 344 B1

## FIG. 1.

n=1

# FIG. 2.

n=2

FIG. 3.

EP 0 849 344 B1

FIG. 4.